Europäisches Patentamt

European Patent Office

Office européen des brevets

(11) Publication number: **0 416 162 A1**

# EUROPEAN PATENT APPLICATION

(21) Application number: **89116632.4**

(22) Date of filing: **08.09.89**

(51) Int. Cl.⁵: **G01V 3/08**

(43) Date of publication of application:
**13.03.91 Bulletin 91/11**

(84) Designated Contracting States:
**DE ES FR GB IT NL SE**

(71) Applicant: **Chen, Lee Su-Chin**
**4 Fl., No. 131, Kwei Lin Road**
**Taipei(TW)**

(72) Inventor: **Chen, Lee Su-Chin**
**4 Fl., No. 131, Kwei Lin Road**
**Taipei(TW)**

(74) Representative: **Dickel, Klaus, Dipl.-Ing. et al**
**Julius-Kreis-Strasse 33**
**W-8000 München 60(DE)**

(54) **Innovative stud finder.**

(57) This invention relates to a new structure of stud finder and more particularly to the one which comprises a base member (1) having an upstanding sidewall portion (12) comprising a scoop channel (121) in which spring elements (4) are set to resiliently support a transparent canopy member (2), which transparent canopy member (2) defines with the base member (12) a chamber in which a magnet subassembly (3) is pivotable. By means of the elastic resilience the spring elements (4) provide, the magnet subassembly (3) may be pressed down to have its marking element (6) which is connected thereto at the bottom mark the right position where the stud or ferrous element is detected by the magnet subassembly (3).

Fig. 1

EP 0 416 162 A1

# INNOVATIVE STUD FINDER

## BACKGROUND OF THE INVENTION

Stud finder is a device proposed for locating the position of studs or any ferrous material elements behind a wall or ground surface. In Stoutenberg et al. US Patent No.3,845,384 there is disclosed a kind of magnetic stud finder which comprises:

a unitary base member including a planar base portion, a sidewall portion upstanding from said planar base portion, and support means formed on the interior of said sidewall portion, said base portion having portions extending laterally outwardly from the base thereof and of the margins of said sidewall portion said laterally outwardly extending portions providing side guide portions with aligning means thereon facilitating marking of the workpiece;

a magnet subassembly comprising an elongated magnet and a sleeve receiving therein at least a portion of said magnet and having mounting portions pivotally mounting said magnet subassemby in said support means with the longitudinal axis of said magnet subassembly extending toward said base portion for pivotal movement relative to said upstanding sidewall portion about an axis parallel to the plane of said base portion, said aligning means being aligned with said pivotal axis of said magnet subassembly; and

a transparent unitary canopy member mounted on said upstanding sidewall portion and defining therewith a chamber in which said magnet subassembly is pivotable, said transparent canopy member permitting viewing of the orientation of said magnet subassembly.

In the said type of stud finders, some disadvantages are inevitable, which may include the followings:

(1) Mistake tends to happen. According to the said conventional stud finder, the base portion has a pair of side guides having V-shaped notches made thereon to align with the pivotal axis of the magnet subassembly and to be used to mark the workpiece when the longitudinal axis of the magnet subassembly assumes in position normal to the plane of the planer base portion. However, because there is a position difference between the magnet subassembly and the side guides, the marked position is not the right position detected, that is the marked position is not the right position the stud or ferrous element locates. Therefore, mistake tends to happen.

(2) Inconvenient to operate, addition marking means required. When to mark the position where the stud or ferrous element is detected, one shall have one hand holding tight the stud finder and the other hand holding a fine marker or writing apparatus to mark the position through the V-shaped notches. Therefore error tends to happen if the stud finder is not firmly positioned when one is having the other hand holding a marking means to mark the position.

It is therefore the main object of the present invention to provide a new structure of stud finder which comprises a base member having a resilient scoop channel for setting therein of spring elements to support a transparent canopy member so as to define therewith a chamber in which a magnet subassembly is pivotable, wherein the magnet subassembly may be pressed down, by means of the elastic resilience that the spring elements provide, to drive the marking means, which is mounted on the magnet subassembly at the bottom, to mark the right position where the stud or ferrous element is detected.

## BRIEF DESCRIPTION OF THE DRAWINGS

Fig. 1 is a perspective exploded view of a stud finder embodying the present invention;

Fig. 2 is a sectional assembly view of the embodiment of Fig. 1;

Fig. 3 is a schematic sectional view, illustrating the positioning of the triangular top end of the sleeve of the magnet subassembly in the V-shaped groove of the transparent canopy member;

Fig. 4 is a schematic sectional view of the present invention, illustrating an embodiment of marking means according to the present invention;

Fig. 5 is a partly schematic sectional view of the present invention, illustrating another embodiment of marking means according to the present invention;

Fig. 6 is a perspective exploded view of another stud finder embodying the present invention;

Fig. 6-1 is a schematic drawing, illustrating the arrangement of a spring element in an elongated notch inside the scoop channel of the base member;

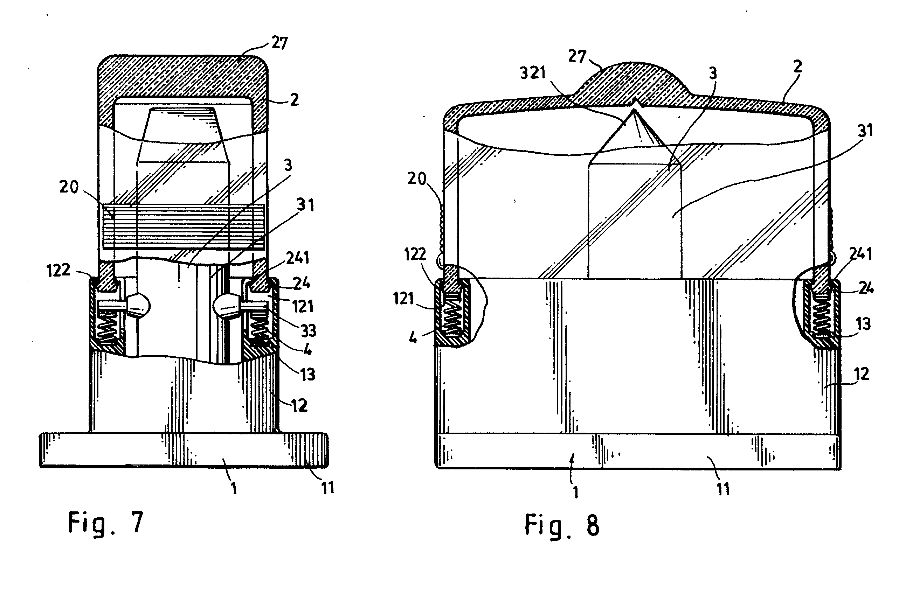

Fig. 7 is a vertically sectional assembly view of the embodiment of Fig. 6;

Fig. 8 is a transversely sectional assembly view of the embodiment of Fig. 6;

Fig. 9 is a perspective exploded view of a further embodiment of stud finder constructed according to the present invention;

Fig. 10 is a sectional assembly view of the embodiment of Fig. 9;

Fig. 11 is a perspective exploded view of a yet another embodiment of stud finder constructed according to the present invention;

Fig. 12 is a perspective exploded view of yet further embodiment of stud finder constructed according to the present invention therein a resilient packing is used to replace spring elements;

Fig. 13 is a perspective fragmentary view of a yet further embodiment of studfinder according to the present invention; and

Fig. 14 is a longitudinal sectional view of the embodiment of Fig. 13.

## DETAILED DESCRIPTION OF THE PREFERRED EMBODIMENTS

With reference to the annexed drawings, a stud finder is including a base member (1) , a transparent canopy member (2) and a magnet subassembly (3). The base member (1) is integrally made through shape molding process, including a planar base portion (11), and a hollow frame-like sidewall portion (12) upstanding from the planar base portion. The transparent canopy member (2) is mounted on the upstanding sidewall portion (12) to define therewith a chamber in which the magnet subassembly (3) pivotable, and to permit viewing of the orientation of the magnet subassembly (3). The magnet subassembly is comprised of elongated magnet (31) and a sleeve (32) proposed to receive therein the elongated magnet (31). Two pivot arms (33) are integrally formed with and projecting from the body of the sleeve (32) to serve as positioning means for pivotally mounting the magnet subassembly (3) on the base member (1).

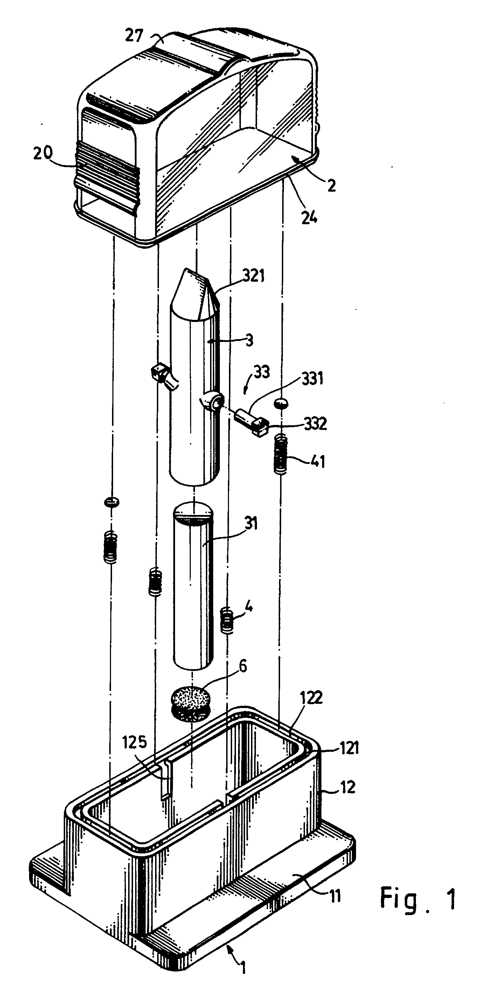

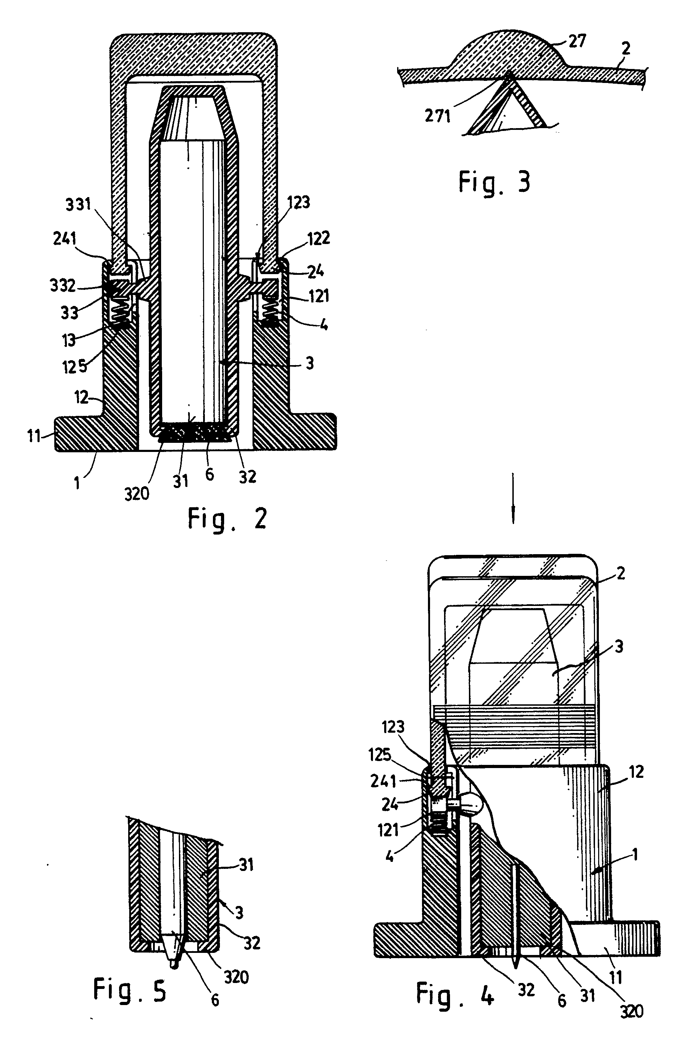

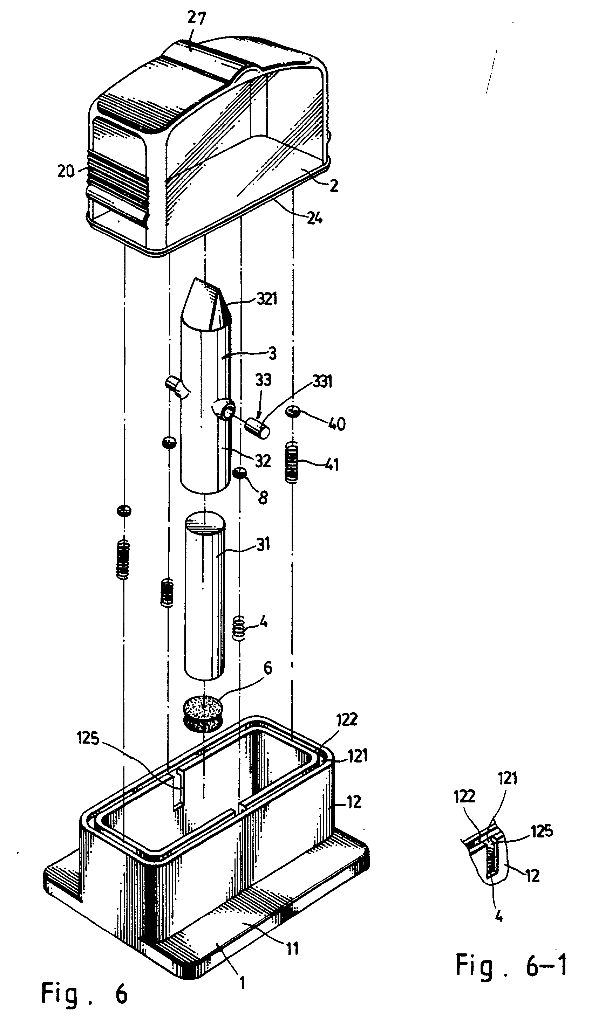

With reference to Figs. 1 and 2, therein illustrated is a first embodiment of a stud finder constructed according to the present invention. The sidewall portion (12) is upstanding from the base member (1) and having a resilient scoop channel (121) therein. The width of the top opening (122) of the resilient scoop channel (121) is slightly smaller than the width of the resilient scoop channel (121) so as to define a pair of oppositely disposed stop portions (123) therebetween. A pair of elongated notches (125) are oppositely and vertically made on the inner wall surface of the sidewall portion (12) to respectively communicate with the resilient scoop channel (121) in which the two pivot arms (33) of the magnet subassembly (3) are seated. Two spring elements (4) are respectively mounted on the seats (15) inside the two notches (125) to support the pivot arms (33) of the magnet subassembly (3). As shown in Fig. 6-1, the two spring elements (4) are specifically designed to have a diameter larger than the width of the elongated notches (125) so as not to escape from the notches (125) when they are set in the scoop channel (122) and positioned at the respective seats (13). In order to increase the contact area, the pivot arms (33) of the magnet subassembly (3) each is having a square end (332) integrally incorporated with a cylindrical arm portion (331) which cylindrical arm portion is movably pivoted to the sleeve (32) of the magnet subassembly. Two supplementary spring elements (41) are further set in the resilient scoop channel (121) of the sidewall portion (12) of the base member (1) oppositely the middle part at the front and back sides to support the transparent canopy member (2). According to the present invention, the two supplementary spring elements (41) is longer than the two spring elements (4), therefore, when the transparent canopy member (2) is mounted on the resilient scoop channel (121) it is supported by the supplementary spring elements (41) not to be in contact with the pivot arms (33) of the magnet subassembly (3). The transparent canopy member (2) is having a step-like bottom end (24) defining a stop portion (241), which stop portion (241) will be disposed above the pivot arms (33) of the magnet subassembly (3) to respetively retain with the stop portion (123) of the base member (1) when the step-like bottom end (24) of the transparent canopy member (2) is set in the resilient scoop channel (121) of the base member (1). In order to make holding of the transparent canopy member easy, the transparent canopy member (2) is having a corrugated surface portion (20) at the front sidewall as well as the back sidewall. As shown in Fig 3, a convex lens (27) is made on the top of the transparent canopy member (2) in the middle, having a center marking made thereon at the top and a V-shaped groove (271) at the inner bottom for receiving therein the triangular top end (321) of the sleeve (32) of the magnet subassembly (3). A marking means (6) is mounted on the bottom end (320) of the sleeve (32) of the magnet subassembly (3) for marking the presence of the stud or the like that has been detected, which marking means (6) may be a sponge or foam plastics or the like which is filled with ink, water or marking powder (as shown in Figs. 1 and 2, or a pointed element (as shown in Fig. 4) or writing apparatus (as shown in Fig. 5) fixedly connected to the magnet (31) at the bottom. According to the present invention, when the stud finder is help in one's hand, the magnet (31) is specifically designed to dispose at a normal inclined position inside the transparent canopy member (2) due to its gravity effect (heavy at the top and light at the bottom). Therefore, when a stud or ferrous element is detected by the magnet (31), the effect of magnetic attraction will drive the magnet (31) to stand still in vertical position, to let the triangular top end (321) aim at the marked center point of the convex lens (27) of the transparent canopy member (2). At this moment, one may have one hand holding the stud finder and pressing down the transparent canopy member (2) to let the triangular to end (321) be firmly positioned in the V-shaped groove (271) (as shown in Fig. 3), and to let the step-like bottom end (24) press down the pivot arms (33) and the spring elements (4) so as to drive the marking means (6) make a mark on the right position detected. As an alternate form, the pivot arms (33) each may be comprised of an unitary cylindrical arm (331) to match with a gasket (40) which is placed on the top of the associated spring element (4).

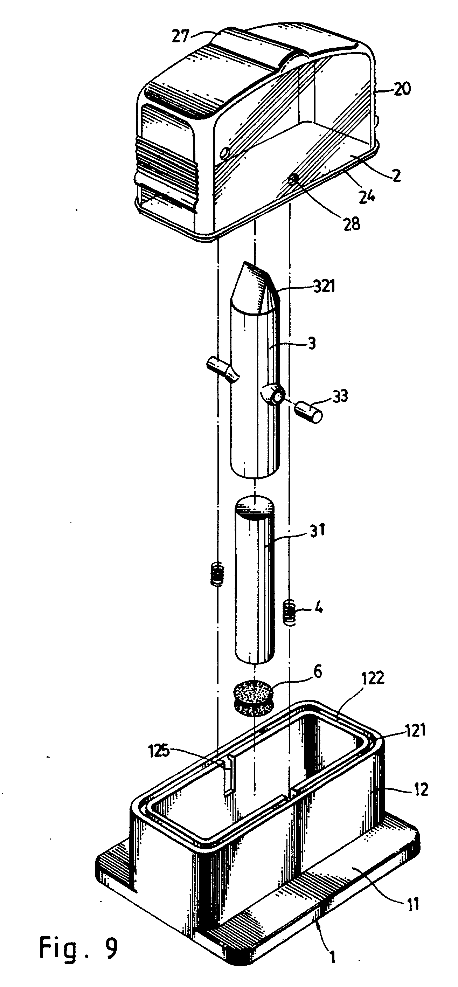

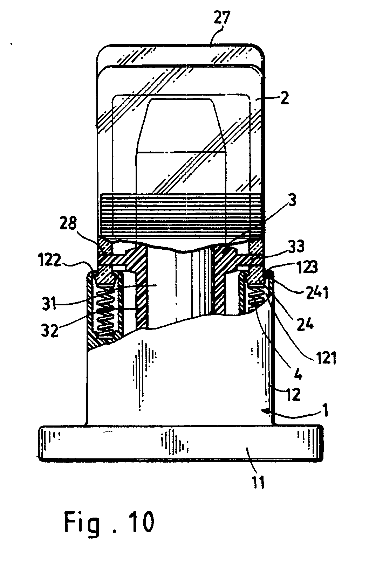

In addition to the relatively pivotal motion of the magnet subassembly (3) against the transparent canopy member (2) as above described, the pivot arms (33) of the magnet subassembly member (3) may be respectively seated in the pivot holes (28) of the transparent canopy member (2) as shown in Fig. 9, and the step-like bottom end (24) of the transparent canopy member (2) is directly mounted on the spring elements (4) in the resilient scoop channel (121) as shown in Fig. 10, such that the magnet subassembly (3) may be directly pivoting against the transparent canopy member (2) or forced by the transparent canopy member (2) to drive the marking means (6) to make a marking when the transparent canopy member (2) is pressed down.

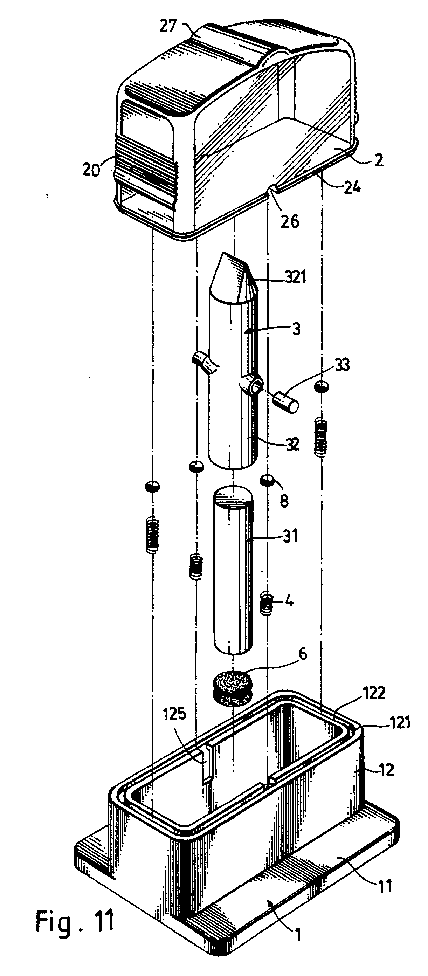

Fig. 11 illustrates another preferred embodiment constructed according to the present invention therein the transparent canopy member (2) is having two U-shaped notches (26) at both lateral bottom ends in the middle part for receiving therein the two pivot arms (33) of the magnet subassembly (3) respectively. According to the present invention, the width of the U-shaped notches (26) is slightly smaller than the spring elements (4) such that the step-like bottom end (24) at both sides of the U-shaped notches (26) is directly pressed on the spring elements (4). Further, a gasket (8) is placed between each pivot arm (33) and spring element (4), that is, a pivot hole is formed between each U-shaped notch (26) and gasket (8) for pivotally setting therein of a pivot arm (33) of the magnet subassembly (3).

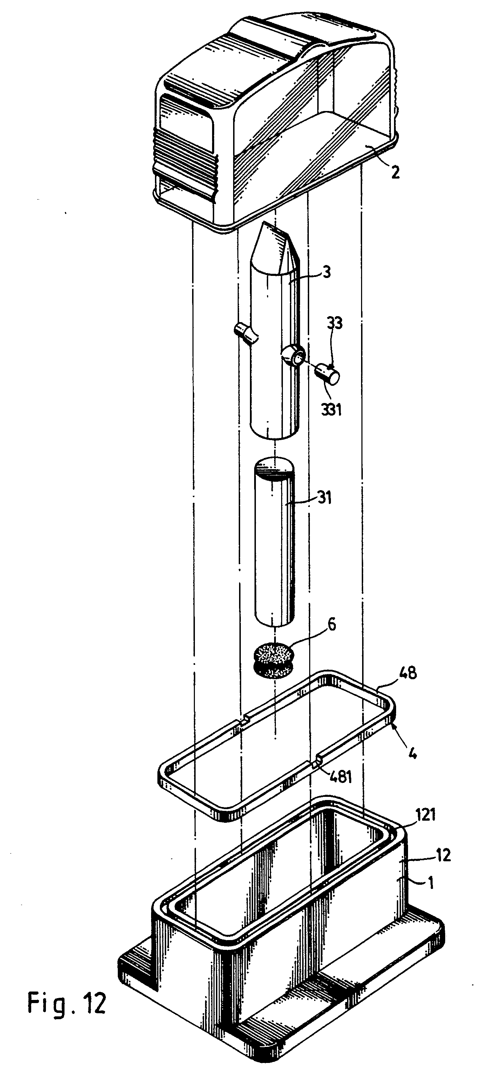

Fig. 12 illustrates still another embodiment of stud finder constructed according to the present invention, therein a resilient packing (48) is used to replace the spring elements (4) and the supplementary spring elements (41), which resilient packing is a square loop made of resilient material such as foam plastics, sponge or soft rubber or the like by means of shape forming process to perfectly match with the resilient scoop channel (121). The resilient packing (48) is having two notches made thereon at both lateral sides in the middle part defining two bearers (481) for setting therein of the two pivot arms (33) of the magnet subassembly (3). According to the present invention, the height of the resilient packing (48) is shorter than the scoop channel (121), such that when the resilient packing (48) is set in the scoop channel (121) there is still space enough for receiving therein the step-like bottom end (24) of the transparent canopy member (2). Because the resilient packing (48) provides an elastic property, it will permit the two pivot arms (33) of the magnet subassembly (3) be concomitantly pressed down to drive the marking means (6) to make a marking on the right position when the transparent canopy member (2) is pressed down, or it will push the magnet subassembly (3) to return to original position when outside pressure force is released from the transparent canopy member (2).

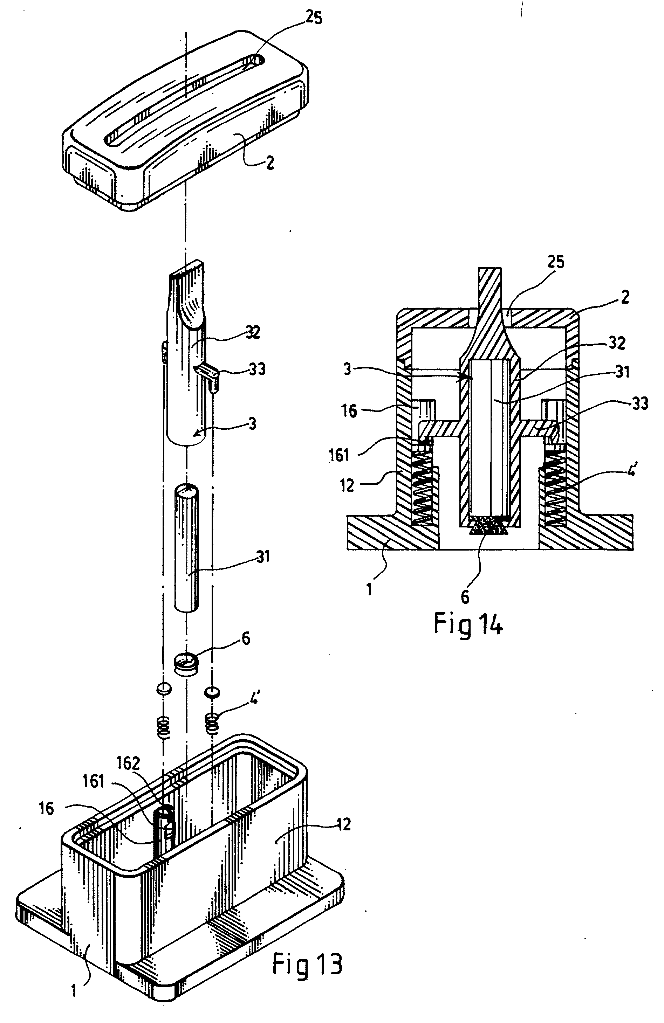

Referring to Figs. 13 and 14, therein illustrated is a yet further embodiment of stud finder constructed according to the present invention and generally comprised of a base member (1), a transparent canopy member (2) and a magnetic subassembly (3). The base member (1) is including a planar base portion (11), and a hollow frame-like sidewall portion (12) upstanding from the planar base portion. The transparent canopy member (2) which is having an elongated slot made thereon through which the top end of the magnetic subassembly (3) may protrude is mounted on the upstanding sidewall portion (12) to define therewith a chamber in which the magnet subassembly (3) pivotable, and to permit viewing of the orientation of the magnet subassembly (3). A pair of hollow cylindrical portions (16) are vertically raising from the inner wall surface of the upstanding sidewall portion (12) at both lateral sides, of which each is enclosed at the bottom to define therein a receiving space for setting therein of a spring element (4'). A longitudinal notch (161) is made on the upper end of each hollow cylindrical portion (16), which longitudinal notch (161) comprises a narrower opening (162) at the top through which the respective pivot arm (33) of the sleeve (32) of the magnetic subassembly (3) may be pressed to set in the accosiated longitudinal notch (161). When the magnetic subassembly is having its two pivot arms (33) respectively set in the two longitudinal notches (161) of the two hollow cylindrical portion (16), it becomes supported by the spring elements (4') to pivot inside the sidewall portion (12). When a stud is detected during operation, the magnetic subassembly (3) is immediately turned to a vertical position, due to magnetic action, to protrude beyond the elongated slot (25) of the canopy member (2). Therefore, the user may directly press down the magnetic subassembly (3) to force the marking means (6), which is fixedly connected to the magnetic subassembly (3) at the bottom, to accurately mark the position of the stud detected. As soon as pressing force is released, the magnetic subassembly (3) is immediately pushed by the spring elements (4') to return to original upper limit position.

## Claims

1. A stud finder, including
a base member integrally made through shape molding process, comprising a planar base portion, and a hollow frame-like sidewall portion upstanding from the planar base portion;
an transparent unitary canopy member mounted on said sidewall portion and defining therewith an inner chamber in which said magnet subassembly is pivotable; and
a magnet subassembly comprising an elongated magnet and a sleeve, said elongated magnet being partly received in said sleeve, said sleeve comprising two pivot arms pivotally disposed at both lateral sides;
characterized in that said upstanding sidewall portion of said base member comprises a loop resilient scoop channel having two elongated notches internally disposed at both lateral sides in which two spring elements are set to support said two pivot arms of said sleeve of said magnet subassembly, two supplementary spring elements being oppositely set in said loop of at the front and back sides to support the step-like bottom end of said transparent canopy member, a marking means at the bottom being fixedly connected to said magnet at the bottom, which marking means will mark the right position where the stud or ferrous element is detected by said magnet subassembly when it is pressed down by outside pressure force through the transparent canopy member and the magnet subassembly.

2. The stud finder as claimed in claim 1, wherein said resilient scoop channel of said base member is having a narrower top opening to define a pair of opposite stop portions.

3. The stud finder as claimed in claim 1, wherein a pair of hollow cylindrical portions are vertically raising from the inner wall surface of the upstanding sidewall portion at both lateral sides, of which each is enclosed at the bottom to define therein a receiving space for setting therein of a spring element and comprises a longitudinal notch at the upper end, said longitudinal notch having a narrower opening at the top through which the respective pivot arm of the sleeve of said magnetic subassemby is pressed to set in the accosiated longitudinal notch to become supported by the spring elements received in said longitudinal notches, such that said magnetic subassembly becomes pivotable inside the sidewall portion of said base member and may be pressed to displace downward.

4. The stud finder as claimed in claim 1, wherein said spring elements may be comprised of spring, spring leaf, resilient gasket, resilient packing or any other suitable resilient material which produces elastic resilience.

5. The stud finder as claimed in claim 1 or 4, wherein said resilient packing is a square loop made of resilient material such as foam plastics, sponge or soft rubber or the like by means of shape forming process to allow for setting in said resilient scoop channel, and is having two notches made thereon at both lateral sides in the middle part defining therein two bearers for setting therein of said two pivot arms of said magnet subassembly, and the height of said resilient packing is shorter than said scoop channel such that when said resilient packing is set in said scoop channel there is still space enough for receiving therein the step-like bottom end of said transparent canopy member.

6. The stud finder as claimed in claim 1, wherein said transparent canopy member is integrally comprising a convex lens at the top in the middle part with a V-shaped groove made thereon at the inner bottom, and comprising a corrugated surface portion at the front sidewall as well as the back sidewall.

7. The stud finder as claimed in claim 1, wherein said marking means may be made of sponge or foam plastics which is filled with ink, water or marking powder, or a pointed element or writing apparatus.

8. The stud finder as claimed in claim 1, wherein said sleeve of said magnet subassembly is having a triangular top end for positioning indication, and said two pivot arms are movably pivoted to said sleeve said sleeve having square rear ends disposed outside and respectively mounted on said spring elements at the top.

9. The stud finder as claimed in claim 1 or 7, wherein said two pivot arms are integrally made on said sleeve through shape forming process and pivotally set in the two pivot holes which are oppositely made on the two lateral sidewalls of said transparent canopy member.

10. The stud finder as claimed in claim 1 or 5, wherein said transparent canopy member is comprising two U-shaped notches at both lateral bottom ends in the middle part for receiving therein said two pivot arms of said magnet subassembly respectively said U-shaped notches having a width slightly smaller than said spring elements so as define two pivot holes respectively with two gaskets, in which pivot holes said two pivot arms are

pivotally received.

Fig. 1

Fig. 2

Fig. 3

Fig. 5

Fig. 4

Fig . 6

Fig . 6-1

Fig. 7

Fig. 8

EP 0 416 162 A1

Fig. 9

Fig . 10

Fig . 11

Fig.12

Fig 13

Fig 14

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A,D | US-A-3 845 384 (STOUTENBERG et al.)<br>* Figures 1-5 * | 1 | G 01 V 3/08 |
| A | US-A-1 971 189 (LEIBING)<br>* Claim 4; figures 1,4,5 * | 1 | |
| A | US-A-2 346 773 (McBRIDE et al.)<br>* Claim 1; figures 1,4 * | 1 | |
| A | DE-C- 508 347 (DEUTSCH)<br>* Claim 1; figure 1 * | 1 | |

TECHNICAL FIELDS SEARCHED (Int. Cl.5)

G 01 V

The present search report has been drawn up for all claims

| Place of search | Date of completion of the search | Examiner |
|---|---|---|
| THE HAGUE | 14-05-1990 | ANDERSON A. TH. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)